# EUROPEAN PATENT SPECIFICATION

(11) **EP 0 793 053 B1**
(45) Date of publication and mention of the grant of the patent: **06.12.2000**
(21) Application number: 97200436.0
(22) Date of filing: 14.02.1997
(51) Int. Cl.: F16T 1/22

(54) **Device for the removal of liquids and/or impurities from a gas**
Vorrichtung für die Beseitigung von Flüssigkeiten und/oder Verunreinigungen aus einem Gas
Appareil pour enlever de liquides et/ou d'impuretés d'un gaz

(30) Priority: 29.02.1996 BE 9600178
(43) Date of publication of application: 03.09.1997
(73) Proprietor: ATLAS COPCO AIRPOWER N.V., 2610 Wilrijk (BE)
(72) Inventor: Van De Vijvere, Luc, 2550 Kontich (BE)
(74) Representative: Donné, Eddy

(56) References cited:
- EP-A- 0 062 014
- FR-A- 354 458
- GB-A- 126 963
- GB-A- 1 472 221
- US-A- 1 448 972

## Description

The present invention relates to a device for the removal of liquids and/or impurities from a gas, comprising a first recipient, which at its upper end communicates with a space or conduit in which gas is contained and a float, commanding a valve opening or closing an outlet, respectively.

The invention is mainly applied in devices such as compressors, dry air blowers, air-conditioning systems and the like, with a view to regulate the percentage of humidity which is present in the air.

The known devices make use of a recipient that catches the humidity from the gas, whereby these devices are provided with a float that co-operates with a valve that opens an outlet at the bottom of the said recipient when the level of the liquid reaches a certain height in the recipient in order to drain in that way periodically the liquid and/or the impurities.

The outlet in the recipient must have a smaller diameter in order that the drainage of the liquid occurs slowly so that no transitional phenomena arise in the characteristics of the gas, such as alterations in pressure or volume.

A serious disadvantage of these known devices is the fact that impurities that are present in the gas, will sink to the bottom of the above-mentioned recipient, whereby they can easily obstruct the small outlet in the recipient when the valve opens, which results in a poor operation of the device and can even render it inoperative.

Such known device is described in EP 0.062.014.

The present invention aims at excluding the abovementioned and other disadvantages.

To this end, a second recipient is located within the first recipient and is substantially closed off from the gas space or conduit, and a connecting canal is provided in a space between both recipients and having a bottom end communicating with said space and an upper end debouching through a passage into the second recipient, the float being inside the second recipient.

An important advantage that is obtained with this device is the fact that the impurities in the gas will be collected in such a manner that the outlet for the liquid can not be obstructed by these impurities.

There are device known that solves also the above mentioned problem of keeping the impurities form the outlet, however in a different manner.

Such device is described in the FR 354.458. This device consists of two adjacent recipients, the first one being in communication with the second one by means of an overflow. The dirt is collected in the first recipient, while the second recipient is provided with a valve controlled by a float.

Another such device is disclosed in GB 126.963. This device comprises a collecting vessel, wherein a float is arranged on an riser tube passing through the float. A discharge pipe is arranged coaxially in the riser tube with a space in between. The top end of the riser tube is closed by a sealing element associated with the top end of the discharge pipe. As the level of the condensate in the vessel rises, the float and the riser tube are lifted and the sealing element is lifted away from the discharge pipe and condensate flows over in the discharge pipe.

In order to better show the characteristics of the invention, a preferred embodiment of a device for the removal of liquids and/or impurities from a gas according to the present invention is described hereafter, as an example, and without any restrictive character whatsoever, reference being made to the accompanying drawings, in which:

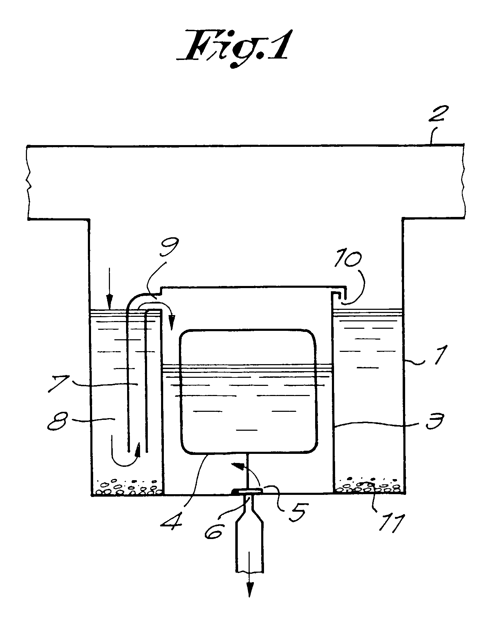

figure 1 represents a schematic view of a device according to the invention;
figure 2 represents a cross-sectional view of a preferred embodiment of the device of the invention;
figure 3 represents a sectional view similar to the one of figure 2, but for another position of the float.

The device according to the invention mainly consists of a recipient 1 which communicates at its upper end with the space or the conduit 2 in which the gas is contained, from which liquid and/or impurities must be removed.

In the recipient 1 a second recipient 3 is applied in which is situated a float 4 that commands a valve 5 which can respectively close and open an outlet 6.

Between both recipients 1 and 3 preferably a vertical connecting canal 7 is applied which communicates at its bottom with the space 8 between both recipients and debouches at its upper end into the recipient 3.

At its upper end the recipient 3 is cut off from the space or conduit 2, possibly with the exception of a small ventilating opening 10 which is positioned at a level which is higher than the passage 9 and which, in this embodiment, is directed downwards.

The operation of the device is simple and as follows.

In a starting situation it is supposed that the recipients 1 and 3 do not contain liquid.

Humidity in the gas will be caught in the recipient 1 on account of its higher weight with regard to the gas. The level of liquid in the space 8 and in the connecting canal 7 will evenly rise.

At the same time impurities 11 which are contained in the gas will also arrive in the recipient 1 in which they will sink to the bottom of the recipient 1 on account of their weight.

The valve 5 will remain in its normal closed position on account of the weight of the float 4.

Once the level of the liquid in the space 8 and in the connecting canal has reached the height of the passage 9, new quantities of liquid which are caught in the recipient 1 will take care that the liquid column in the space 8 undergoes a pressure as a result of which the level of the liquid in the connecting canal 7 tends to rise but cannot do so, so that an overflow occurs of the same quantity of liquid in the recipient 3, through the passage 7, and a same quantity of air escapes from the recipient 3 through a ventilating opening 10.

When the level of the liquid in the recipient 3 has reached a determined height, the downward pressure exerted by the weight of the float 4 on the column of liquid in the recipient 3 is equal to the upward pressure exerted by this liquid column on the float 4.

When the level of the liquid in the recipient 3 further rises then the float 4 will likewise move upwards by which the valve 5 slowly opens.

Liquid will now drain through the small drainage opening 6 from the recipient 3, by which the level of the liquid and at the same time the float 4 in the recipient 3 will drop until the float 4 automatically closes the valve 5 again.

Further quantities of liquid from the gas which are caught by the recipient 1 will cause a drainage of an equal quantity of liquid towards the drainage opening 6.

Impurities 11 from the gas will never be propelled upwards jointly with the liquid in the connecting canal 7 on account of their weight. As a result the content of the recipient will always remain free from impurities, whereby obstructions of the outlet 6 are avoided.

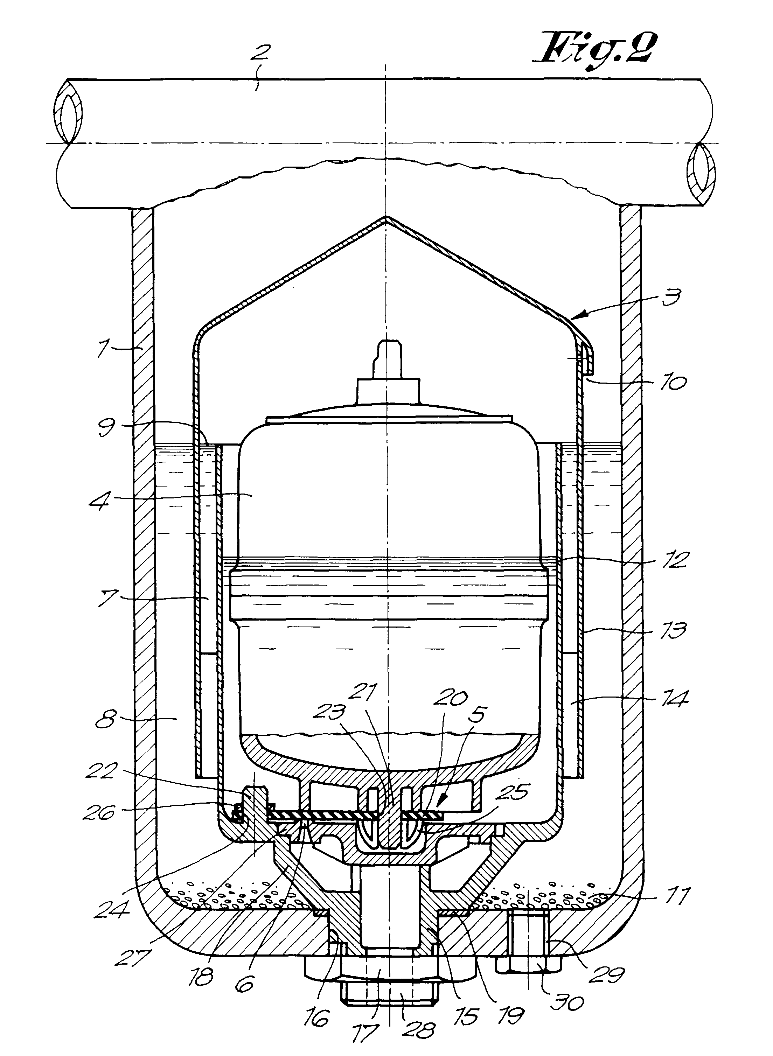

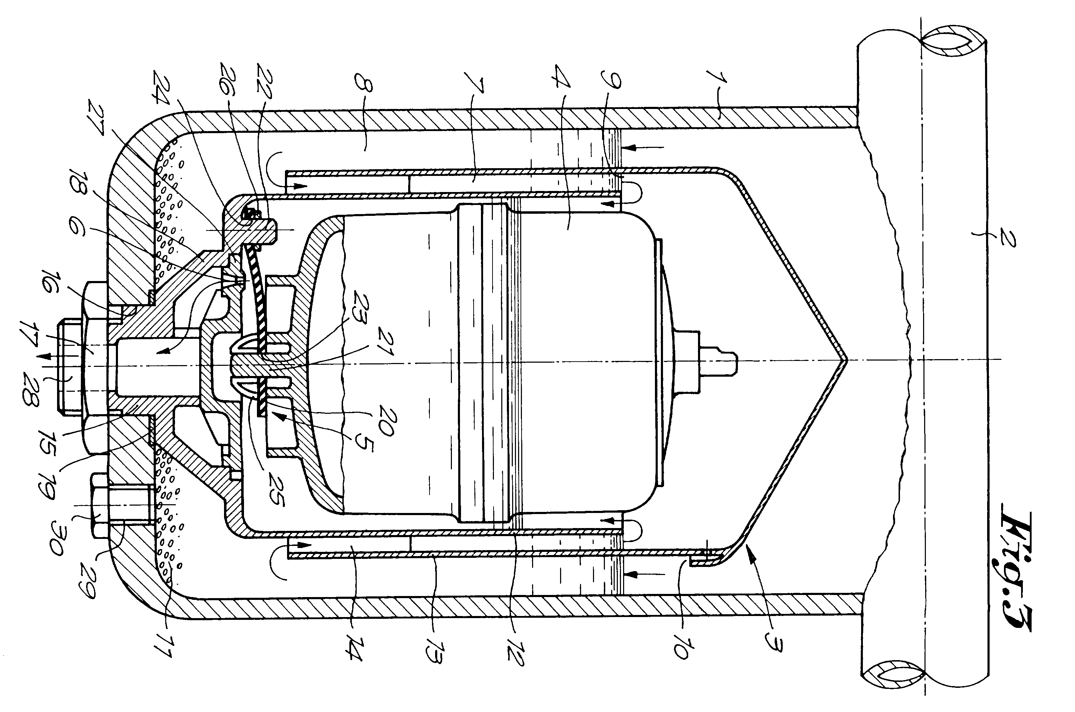

In a preferred embodiment of the device, such as represented in the figures 2 and 3, the recipient 3 is formed by a tubular case 12 across which a dome 13 is applied which is fastened at a certain distance with regard to the tubular case 12 by means of spacers 14.

These spacers 14 could possibly extend as far as against or almost against the inner wall of the recipient 1 in such a manner that partitions are formed which counteract possible turbulences in the column of the liquid.

The connecting canal 7 is formed by the space between the tubular case 12 and the dome 13.

The tubular case 12 narrows downwards into a throat 15 which protrudes through an opening 16 at the bottom of the recipient 1 and which is fixed to the recipient 1 by means of a nut 17. A sealing ring 19 is applied between the collar 18 of the tubular case 12 and the opening 16 in the recipient 1.
The valve is preferably formed by an elastic membrane 20 which is fixed to a protrusion 21 of the float 4, on the one hand, and to a protrusion 22 in the recipient 3, on the other hand.

To this end the membrane 20 is for example provided with openings 23-24 which allow to apply it over the protrusions 21-22 and to keep it there by means of tightening rings 25-26.

The valve seat 27 which is fixedly attached in the collar 18 of the tubular case 12 is provided with a small opening which forms the outlet 6 of the device. This outlet 6 debouches downstream in the outlet canal 28 which itself extends outside the device.

The dome 13 is at the upper end closed with the exception of a downward directed small ventilating opening 10 which is situated at a height which is higher than the passage 9. The ventilating opening 10 is directed downwards in order to avoid that impurities from the gas would arrive along this opening into the recipient 3.

At the bottom, the recipient 1 is provided with an extra opening 29 which can be closed by means of a tap 30.

By regularly removing the tap 30 from the opening 29 impurities 11 on the bottom of the recipient 1 can be drained in order to avoid that the their quantity increases in the recipient 1 in such a manner that they would arrive through the connecting canal 7 into the recipient 3, whereby they would obstruct the outlet 6.

The device is very effective and simple in operation and maintenance.

The present invention is in no way limited to the embodiment described above and represented in the drawings, but such device for the removal of liquids and/or impurities from gas can be realised in different variants, without leaving the scope of the invention as defined in the claims.

## Claims

1. Device for the removal of liquids and/or impurities from a gas, comprising a first recipient (1), which at its upper end communicates with a space or conduit (2) in which gas is contained and a float (4), commanding a valve (5) which keeps an outlet (6) closed, respectively opens it, characterized by a second recipient (3) located within the first recipient (1) and substantially closed off from the gas space or conduit (2), and a connecting canal (7) provided in a space (8) between both recipients (1-3) and having a bottom end communicating with said space (8) and an upper end debouching through a passage (9) into the second recipient (3), the float (4) being inside the second recipient (3).

2. Device according to claim 1, characterized in that the second recipient (3) is formed by a tubular case (12) across which a dome (13) is applied which is closed at the upper end.

3. Device according to claims 1 and 2, characterized in that the connecting canal (7) is formed by the space between the tubular case (12) and the dome (13).

4. Device according to anyone of the preceding claims, characterized in that the valve (5) is formed by an elastic membrane (20) which is fixed to the float (4), on the one hand, and to the recipient (3), on the other hand.

5. Device according to claim 4, characterized in that the elastic membrane (20) is provided with openings (23-24) to be applied over protrusions (21-22) of respectively the float (4) and the recipient (3) and which are fastened by means of tightening rings (25-26).

6. Device according to anyone of the preceding claims, characterized in that the recipient (3) is provided with a downward directed ventilating opening (10) which is situated higher than the passage (9).

7. Device according to anyone of the preceding claims, characterized in that the recipient (1) is provided at its bottom with an opening (29) which is normally closed with a tap (30).

8. Device according to claim 2 or 3, characterized in that in the space between the tubular case (12) and the dome (13) spacers (14) are provided.

9. Device according to claim 8, characterized in that the spacers (14) extend as far as against or almost against the inner wall of the recipient (1).

## Patentansprüche

1. Vorrichtung für die Beseitung von Flüssigkeiten und/oder Verunreinigungen aus einem Gas, umfassend einen ersten Behälter (1), der an seinem oberen Ende mit einem Raum oder einer Leitung (2) in Verbindung steht, worin Gas enthalten ist, und einen Schwimmer (4), der ein Ventil (5) steuert, das einen Auslass (6) geschlossen hält, beziehungsweise ihn öffnet, gekennzeichnet durch einen zweiten Behälter (3), der sich in dem ersten Behälter (1) befindet und hauptsächlich vom Gasraum oder der Gasleitung (2) abgeschlossen ist, und einen Kanal (7), der in einem Raum (8) zwischen den beiden Behältern (1-3) vorgesehen ist und ein unteres Ende aufweist, das mit besagtem Raum (8) in Verbindung steht, und ein oberes Ende, das durch einen Durchlass (9) im zweiten Behälter (3) mündet, wobei der Schwimmer (4) sich innerhalb des zweiten Behälters (3) befindet.

2. Vorrichtung gemäß Anspruch 1, dadurch gekennzeichnet, dass der zweite Behälter (3) von einem röhrenförmigen Gehäuse (12) gebildet wird, über dem eine Kuppel (13) angebracht ist, die am oberen Ende abgeschlossen ist.

3. Vorrichtung gemäß Anspruch 1 und 2, dadurch gekennzeichnet, dass der Verbindungskanal (7) von dem Raum zwischen dem röhrenförmigen Gehäuse (12) und der Kuppel (13) gebildet wird.

4. Vorrichtung gemäß einem der vorgenannten Ansprüche, dadurch gekennzeichnet, dass das Ventil (5) von einer elastischen Membran (20) gebildet wird, die einerseits am Schwimmer (4) und andererseits am Behälter (3) befestigt ist.

5. Vorrichtung gemäß Anspruch 4, dadurch gekennzeichnet, dass die elastische Membran (20) mit Öffnungen (23-24) versehen ist, um über Vorsprüngen (21-22) des Schwimmers (4) beziehungsweise des Behälters (3) angebracht zu werden, und die mittels Spannringen (25-26) befestigt werden.

6. Vorrichtung gemäß einem der vorgenannten Ansprüche, dadurch gekennzeichnet, dass der Behälter (3) mit einer nach unten gerichteten Lüftungsöffnung (10) vresehen ist, die höher als der Durchlass (9) angeordnet ist.

7. Vorrichtung gemäß einem der vorgenannten Ansprüche, dadurch gekennzeichnet, dass der Behälter (1) an seinem Boden mit einer Öffnung (29) versehen ist, die normalerweise mit einem Stopfen (30) verschlossen ist.

8. Vorrichtung gemäß Anspruch 2 oder 3, dadurch gekennzeichnet, dass in dem Raum zwischen dem röhrenförmigen Gehäuse (12) und der Kuppel (13) Zwischenstücke (14) vorgesehen sind.

9. Vorrichtung gemäß Anspruch 8, dadurch gekennzeichnet, dass die Zwischenstücke (14) sich bis gegen oder nahezu gegen die Innenwand des Behälters (1) erstrecken.

## Revendications

1. Dispositif pour éliminer des liquides et/ou des impuretés d'un gaz, comprenant un premier récipient (1) qui, à son extrémité supérieure, communique avec un espace ou avec un conduit dans lequel est contenu un gaz, et un flotteur (4) commandant une soupape (5) qui maintient une sortie (6) fermée, respectivement qui l'ouvre, caractérisé par un second récipient (3) disposé à l'intérieur du premier récipient (1) et essentiellement obturé par rapport à l'espace ou au conduit (2) contenant le gaz, et un canal de liaison (7) prévu dans un espace (8) ménagé entre les deux récipients (1-3) et possédant une extrémité inférieure qui communique avec ledit espace (8) et une extrémité supérieure qui débouche à travers un passage (9) dans le second récipient (3) le flotteur (4) étant disposé à l'intérieur du second récipient (3).

2. Dispositif selon la revendication 1, caractérisé en ce que le second récipient (3) se présente sous la forme d'un boîtier tubulaire (12) à travers lequel est appliqué un dôme (13) qui est fermé à son extrémité supérieure.

3. Dispositif selon les revendications 1 et 2, caractérisé en ce que le canal de liaison (7) est réalisé par l'espace libre ménagé entre le boîtier tubulaire (12) et le dôme (13).

4. Dispositif selon l'une quelconque des revendications précédentes, caractérisé en ce que la soupape (5) est formée par une membrane élastique (20) qui est fixée au flotteur (4) d'une part, et au récipient (3) d'autre part.

5. Dispositif selon la revendication 4, caractérisé en ce que la membrane élastique (20) est munie d'ouvertures (23-24) destinées à venir se disposer pardessus des saillies (21-22) respectivement du flotteur (4) et du récipient (3) et qui sont fixées à l'aide d'anneaux de serrage (25-26).

6. Dispositif selon l'une quelconque des revendications précédentes, caractérisé en ce que le récipient (3) est muni d'une ouverture de ventilation (10) orientée vers le bas qui est située plus haut que le passage (9).

7. Dispositif selon l'une quelconque des revendications précédentes, caractérisé en ce que le récipient (1) est muni dans sa partie inférieure d'une ouverture (29) qui est normalement fermée avec un robinet (30).

8. Dispositif selon la revendication 2 ou 3, caractérisé en ce qu'on prévoit des écarteurs (14) dans l'espace ménagé entre le boîtier tubulaire (12) et le dôme (13).

9. Dispositif selon la revendication 8, caractérisé en ce que les écarteurs (13) s'étendent sur une distance telle qu'ils viennent buter contre ou pratiquement contre la paroi interne du récipient (1).
